# EUROPÄISCHE PATENTSCHRIFT

(11) **EP 3 512 046 B1**
(45) Veröffentlichungstag und Bekanntmachung des Hinweises auf die Patenterteilung: **02.09.2020**
(21) Anmeldenummer: 18020550.2
(22) Anmeldetag: 24.10.2018
(51) Int. Cl.: H01R 13/506, H01R 31/06, H01R 13/00, H01B 7/42, H01R 13/502, B60L 53/16

(54) **LADEKABEL UND LADESTATION FÜR ELEKTROAUTOS**
CHARGING CABLE AND CHARGING STATION FOR ELECTRIC CARS
CABLE DE RECHARGE ET STATION DE RECHARGE POUR VOITURES ELECTRIQUES

(30) Priorität: 16.01.2018 DE 102018100827
(43) Veröffentlichungstag der Anmeldung: 17.07.2019
(73) Patentinhaber: Dr.Ing. h.c. F. Porsche Aktiengesellschaft, 70435 Stuttgart (DE)
(72) Erfinder: Götz, Stefan, 85659 Forstern (DE); Rönfanz, Jari, 75417 Mühlacker (DE); Reber, Volker, 74544 Michelbach an der Bilz (DE)

(56) Entgegenhaltungen:
- DE-A1-102015 112 347
- JP-A- 2016 509 824
- US-A- 3 271 725
- US-A1- 2017 001 529

## Beschreibung

Die vorliegende Erfindung betrifft ein Ladekabel für Elektroautos. Die vorliegende Erfindung betrifft darüber hinaus eine entsprechende Ladestation.

### Stand der Technik

Als Ladestation wird in der Elektrotechnik jedwede stationäre Vorrichtung oder elektrische Anlage bezeichnet, welche dazu dient, mobilen akkubetriebenen Geräten, Maschinen oder Kraftfahrzeugen durch einfaches Einstellen oder Einstecken Energie zuzuführen, ohne den Energiespeicher - etwa die Traktionsbatterie eines Elektroautos - entnehmen zu müssen. Ladestationen für Elektroautos werden mitunter auch als "Stromtankstellen" bezeichnet und können mehrere Ladepunkte umfassen.

Bekannt sind hier insbesondere Gleichstrom-Schnellladesysteme (*high performance charging,* HPC) wie das in Europa verbreitete sogenannte kombinierte Ladesystem (*combined charging* system, CCS). Beim gattungsmäßigen Gleichstromladen wird Gleichstrom aus der Ladesäule direkt in das Fahrzeug eingespeist und hierzu durch einen leistungsstarken Gleichrichter vom Stromnetz oder durch große Pufferakkumulatoren an Solartankstellen bereitgestellt. Im Fahrzeug befindet sich ein Batteriemanagementsystem, das mit der Ladesäule kommuniziert, um die Stromstärke anzupassen oder bei Erreichung einer Kapazitätsgrenze den Vorgang zu beenden.

Die Leistungselektronik befindet sich hierbei üblicherweise in der Ladesäule. Da die Gleichstromanschlüsse der Ladesäule direkt mit entsprechenden Anschlüssen der Traktionsbatterie verbunden werden, lassen sich verlustarm hohe Ladeströme übertragen, was kurze Ladezeiten ermöglicht, aber auch eine beträchtliche Abwärme erzeugt.

Für diesen Zweck sind unterschiedlichste Ladekabel sowie Ladekupplungen und -stecker bekannt, die typischerweise einem hohen Verschleiß ausgesetzt sind. Insbesondere die Kontaktstifte ("Pins") sind durch die hohe Anzahl von Steckzyklen im täglichen Gebrauch einem hohen Abrieb unterworfen. Die Abnutzung der Pins gefährdet jedoch den verlässlichen Kontakt insbesondere bei der Leitung von Signalen, die mit geringer Spannung übertragen werden. Die Kunststoffschale und die Pin-Halterung sind neben der mechanischen Abnutzung durch die häufigen Steckzyklen und die Kräfte auf die Pin-Fassungen auch der Zersetzung durch Witterung, Licht, Sauerstoff und andere Oxidationsmittel ausgesetzt. Dabei ist zu beachten, dass diese Bauteile eine sicherheitskritische Isolationsfunktion erfüllen. Dabei sind sie mitunter einer beträchtlichen mechanischen Belastung ausgesetzt, insbesondere durch ein Fallenlassen des Steckers auf den Boden. Das Kabel als relativ flexibles Element erträgt dies deutlich leichter als der Stecker.

Ein vollständiger Ersatz des Steckers in regelmäßigen Zyklen ist daher branchenüblich, allerdings sehr kosten- und zeitintensiv. Wird der Stecker mit dem Kabel ausgetauscht, müssen die Ladesäulen in der Regel geöffnet werden, um alle Signal- und Leistungsleiter neu anzuschließen und die Kabelführung, etwaige Zugentlastungen oder Aufhängungen neu einzurichten. Werden dagegen nur der Stecker und die verschlissenen Pins ausgetauscht, so müssen in der Regel die Leitungsenden gekürzt und die neuen Pins gelötet oder gecrimpt werden. Vor Ort erweisen sich diese Verfahren als aufwändig und anfällig für Qualitätsprobleme. Ferner verringern sich mit jedem Austausch von Pins ungewollt die Kabellängen. Nach dem selektiven Austausch einzelner Pins haben die Leitungen zudem unterschiedliche Leitungslängen.

Aufgrund des hohen Aufwandes beim Austausch von Ladekabeln im Feld werden daher teils kostenintensive widerstandsfähige Materialien verwendet, beispielsweise Gold-Nickel-Pins und zersetzungsbeständige Kunststoffe für die Stecker-Gehäuse, die jedoch den Austausch nur verzögern, nicht aber verhindern können.

CN105896212, DE102011106335, DE102013007330, EP2555340B1 sowie US2015035483 offenbaren Elektrofahrzeug-Ladestecker mit austauschbaren Abschnitten.

### Offenbarung der Erfindung

Die Erfindung stellt ein Ladekabel für Elektroautos sowie eine entsprechende Ladestation gemäß den unabhängigen Ansprüchen bereit.

Eine Grundidee der Erfindung besteht in der Teilung des Ladesteckers in mindestens einen Teil mit hohem Verschleiß und/oder hoher Sicherheitsfunktion oder -bedeutung sowie mindestens einen Teil mit geringerem Verschleiß und/oder niedrigerer Sicherheitsfunktion oder -bedeutung. Der Teil des Ladesteckers mit hohem Verschleiß und/oder hoher Sicherheitsfunktion oder -bedeutung wird entsprechend austauschbar gestaltet.

Beispielsweise ist im Sinne der Erfindung der überwiegende Teil des Steckers, der in die mechanische Aufnahme im Fahrzeug eingeführt und damit mechanischem Abrieb und Belastung ausgesetzt wird, austauschbar. Es ist dabei vorteilhaft, dass möglichst alle sensitiven Teile (ggf. auch leicht brechende Teile des Gehäuses) Teil des Tauschteiles sind, andererseits aber so wenig wie möglich getauscht wird, um die Kosten des Teiles zu beschränken. Der Stecker- oder Isolationskörper kann insbesondere Pins enthalten, die ebenso mit dem Isolationskörper ausgetauscht werden. Wird der Isolationskörper wie eine Maske über den Stecker aufgesetzt, können - angesichts der häufigen Steckvorgänge mit wechselnden Fahrzeugen besonders verschleißanfälligen - Pins über hochwertige Kontaktstifte mit nur wenigen Steckzyklen mit dem Stecker verbunden werden. Diese zusätzlichen Pins benötigen hierbei nur sehr wenige Steckzyklen, da diese nur beim Wechsel des Isolationskörpers gesteckt werden.

Weitere vorteilhafte Ausgestaltungen der Erfindung sind in den abhängigen Patentansprüchen angegeben. So können der Isolationskörper und mindestens ein Pin auf den Stecker-Körper aufsteckbar gestaltet werden. In diesem Fall sollte der Isolationskörper vorzugsweise am Stecker fixiert werden, beispielsweise mittels Schrauben, Klemmfedern oder Nieten. Vorzugsweise ist die Fixierung für Dritte nicht lösbar, beispielsweise durch die Verwendung von unüblichen Schraubenköpfen, Nieten, einer chemisch lösbaren Verklebung der Schrauben oder eines Schlosses.

### Kurze Beschreibung der Zeichnungen

Ausführungsbeispiele der Erfindung sind in den Zeichnungen dargestellt und werden im Folgenden näher beschrieben.
Figur 1 zeigt das Beispiel eines erfindungsgemäßen CCS-Ladekabels gemäß EN 62196 Typ 2 ("IEC Typ 2") mit gelöstem Steckverbinder.
Figur 2 zeigt die Kupplung des Steckverbinders in ihren Einzelheiten gemäß einer ersten Ausführungsform der Erfindung.
Figur 3 zeigt die Kupplung des Steckverbinders in ihren Einzelheiten gemäß einer zweiten Ausführungsform der Erfindung.
Figur 4 zeigt eine erste Ausführungsvariante des CCS-Ladekabels.
Figur 5 zeigt eine zweite Ausführungsvariante des CCS-Ladekabels.

### Ausführungsformen der Erfindung

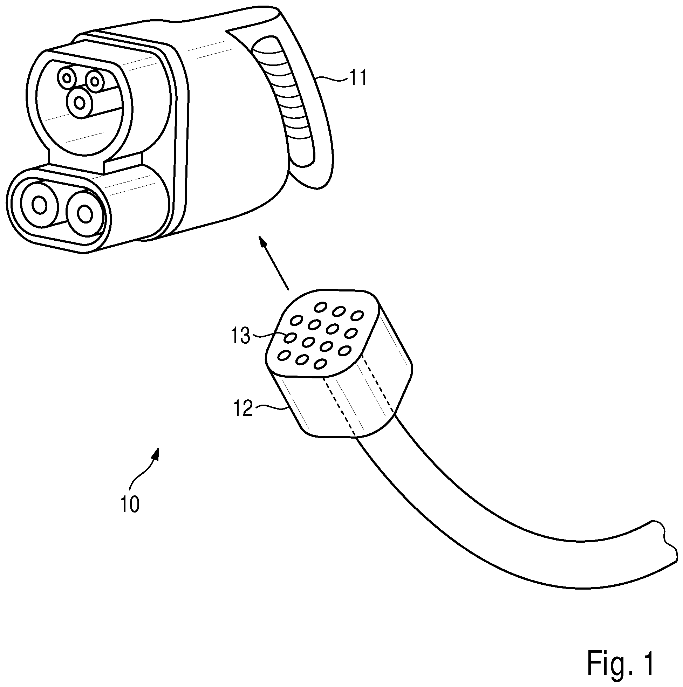

Figur 1 illustriert die erfindungsgemäße Ergänzung eines Ladekabels (10) um einen zusätzlichen Steckverbinder (12), durch welchen die einer hoher Abnutzung unterworfenen Kontaktstifte und die Schale gleichsam als austauschbares Verschleißteil ausgebildet werden können. Die Kontaktstifte oder -öffnungen (13) des vorgeschlagenen Steckverbinders (12) können hierbei für sehr wenige Steckzyklen ausgelegt sein. Der als Isolationskörper (11) aufgesteckte eigentliche Ladestecker hingegen kann im Hinblick auf seinen erwarteten Verschleiß unter Verwendung günstigerer Pins und günstigeren Kunststoffs gefertigt werden.

Um ein Trennen des Steckverbinders (12) durch Unbefugte zu verhindern, sind beispielsweise nicht mit Standardwerkzeug lösbare Sicherheitsschrauben oder ein Schloss vorgesehen. Zur Erkennung eines Absteckens und Abbrechen des Ladevorganges durch Abschalten der Spannung verfügt das Ladekabel (10) zudem entweder über eine eigene Interlockschleife - beispielsweise in Gestalt eines Kurzschlussbügels - oder wird von der Interlockschleife eines übergeordneten Ladesystems durchzogen. Vorzugsweise taucht der Außenbereich der Kupplung zumindest über eine gewisse Strecke in den Isolationskörper (11) ein, die von der Kriechstromfestigkeit des verwendeten Isolierstoffes abhängt.

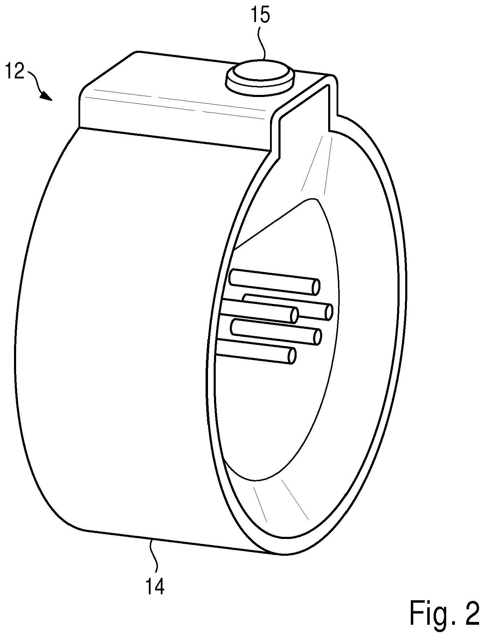

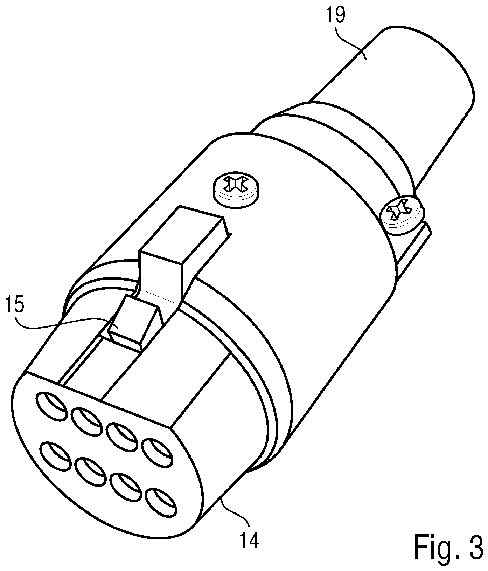

Figur 2 und 3 beleuchten den zu diesem Zweck versenkten Kragen (14) im Detail, welcher zugleich verhindert, dass bei leicht geöffnetem Steckverbinder (12) die Pins berührbar sind, bevor der Stromfluss durch die Interlockschleife sicher unterbrochen wird. Erkennbar ist in dieser Abbildung zudem die optionale Verriegelung (15), die vorliegend durch den Riegel eines Schlosses bewirkt wird.

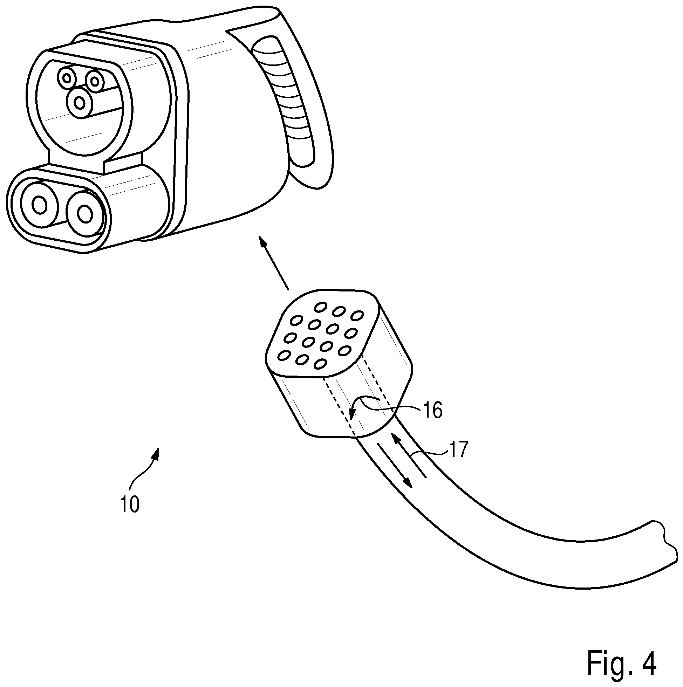

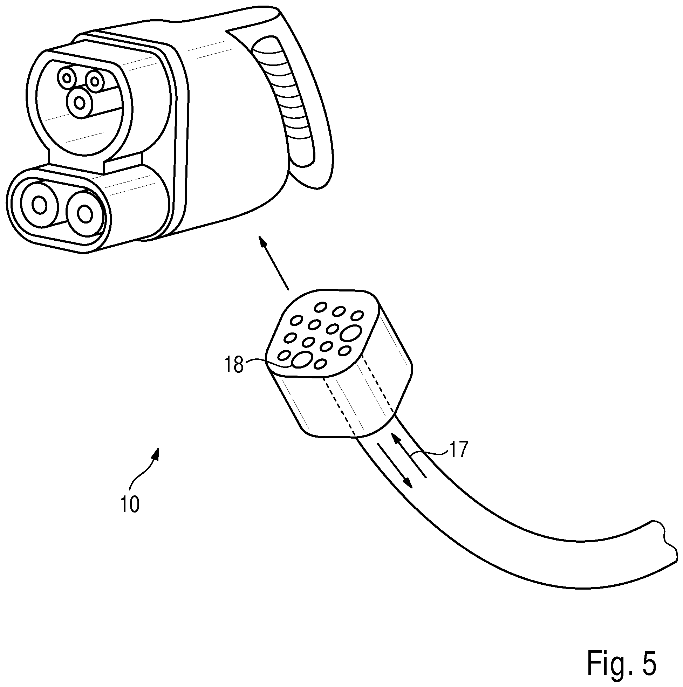

Die Figuren 4 und 5 lenken das Augenmerk des Betrachters auf zwei optionale Ausführungsvarianten einer etwaigen Kabelkühlung der Anschlussleitung (19 - Figur 3). Diese endet vorzugsweise, wie in Figur 4 dargestellt, im Steckverbinder (12), der zu diesem Zweck lediglich eine Verbindung (16) von Zu- und Ablauf (17) herstellt. Somit werden, wenn keine Übergabe des Kühlmediums an das Fahrzeug vorgesehen ist, die Kosten für Flüssigkeitskupplungen gespart. Die Kühlung der Anschlussleitung (19) erlaubt es hierbei, deren Kabelgewicht durch eine Querschnittsreduzierung zu verringern, während die Kabel im Isolationskörper (11) einen deutlich höheren, idealerweise den Normwerten für den Fall einer reinen Luftkonvektion entsprechenden Leiterquerschnitt aufweisen sollten.

Sollte trotzdem das Kühlmedium bis in den Isolationskörper (11) transportiert werden, so bietet die Lösung gemäß Figur 5 den Vorteil, dass kostengünstige nicht Leckage-freie oder sogar nicht absperrende Flüssigkeitskupplungen (18) verwendet werden können. Etwaige Lufteinschlüsse können vom Servicetechniker zuverlässig beispielsweise durch eine Entlüftung des Kühlsystems beseitigt werden.

## Patentansprüche

1. Ladekabel (10) für ein Elektroauto,
mit folgenden Merkmalen:
- das Ladekabel (10) umfasst einen Isolationskörper (11) mit Pins, einen Steckverbinder (12) mit Kontaktstiften und Kontaktöffnungen (13) sowie eine Anschlussleitung (19) und
- der Steckverbinder (12) verbindet den Isolationskörper (11) über die Kontaktstifte und Kontaktöffnungen (13) derart lösbar mit der Anschlussleitung (19), dass die Pins über die Kontaktstifte mit dem Steckverbinder (12) verbunden sind,
**gekennzeichnet durch** folgende Merkmale:
- die Anschlussleitung (19) weist einen Zu- und Ablauf (17) für Kühlflüssigkeit auf,
- der Steckverbinder (12) weist Flüssigkeitskupplungen (18) des Zu- und Ablaufes (17) an den Isolationskörper (11) auf und
- der Isolationskörper (11) ist für eine Kühlung mittels der Kühlflüssigkeit eingerichtet.

2. Ladekabel (10) nach Anspruch 1,
**gekennzeichnet durch** eines der folgenden Merkmale:
- die Kontaktstifte sind dauerhaft mit dem Isolationskörper (11) verbunden oder
- die Kontaktstifte sind dauerhaft mit der Anschlussleitung (19) verbunden.

3. Ladekabel (10) nach Anspruch 1 oder 2,
**gekennzeichnet durch** folgende Merkmale:
- der Steckverbinder (12) weist einen Kragen (14) auf und
- der Steckverbinder (12) ist derart geformt, dass der Kragen (14) in den Steckverbinder (12) eintaucht, wenn der Isolationskörper (11) mit der Anschlussleitung (19) verbunden wird.

4. Ladekabel (10) nach Anspruch 3,
**gekennzeichnet durch** folgendes Merkmal:
- der Kragen (14) weist eine mechanische Verriegelung (15), insbesondere ein Schloss auf.

5. Ladekabel (10) nach einem der Ansprüche 1 bis 4,
**gekennzeichnet durch** folgendes Merkmal:
- das Ladekabel (10) weist eine Interlockschleife, insbesondere einen Kurzschlussbügel auf.

6. Ladekabel (10) nach einem der Ansprüche 1 bis 5,
**gekennzeichnet durch** mindestens eines der folgenden Merkmale:
- der Steckverbinder (12) weist Schrauben, insbesondere Sicherheitsschrauben, auf,
- der Steckverbinder (12) weist Klemmfedern auf oder
- der Steckverbinder (12) weist Niete auf.

7. Ladekabel (10) nach einem der Ansprüche 1 bis 6,
**gekennzeichnet durch** folgende Merkmale:
- der mindestens eine Kontaktstift oder die mindestens eine Kontaktöffnung des Isolationskörpers (1 1)verfügt über eine Nickel-Gold-Oberfläche.

8. Ladestation mit einem Ladekabel (10) nach einem der Ansprüche 1 bis 7.

## Claims

1. Charging cable (10) for an electric car,
having the following features:
- the charging cable (10) comprises an insulating body (11) with pins, a plug-type connector (12) with contact pins and contact openings (13) and a connecting line (19), and
- the plug-type connector (12) detachably connects the insulating body (11) to the connecting line (19) via the contact pins and contact openings (13) in such a way that the pins are connected to the plug-type connector (12) via the contact pins,
**characterized by** the.following features:
- the connecting line (19) has an inflow and outflow (17) for cooling fluid,
- the plug-type connector (12) has fluid couplings (18) of the inflow and outflow (17) to the insulating body (11), and
- the insulating body (11) is configured for cooling by means of the cooling fluid.

2. Charging cable (10) according to Claim 1, **characterized by** one of the following features:
- the contact pins are permanently connected to the insulating body (11), or
- the contact pins are permanently connected to the connecting line (19).

3. Charging cable (10) according to Claim 1 or 2, **characterized by** the following features:
- the plug-type connector (12) has a collar (14), and
- the plug-type connector (12) is shaped in such a way that the collar (14) dips into the plug-type connector (12) when the insulating body (11) is connected to the connecting line (19).

4. Charging cable (10) according to Claim 3, **characterized by** the following feature:
- the collar (14) has a mechanical locking means (15), in particular a lock.

5. Charging cable (10) according to one of Claims 1 to 4,
**characterized by** the following feature:
- the charging cable (10) has an interlock loop, in particular a short-circuiting link.

6. Charging cable (10) according to one of Claims 1 to 5,
**characterized by** at least , one of the following features:
- the plug-type connector (12) has screws, particular safety screws,
- the plug-type connector (12) has clamping springs, or
- the plug-type connector (12) has rivets.

7. Charging cable (10) according to one of Claims 1 to 6,
**characterized by** the following feature:
- the at least one contact pin or the at least one contact opening of the insulating body (11) has a nickel-gold surface.

8. Charging station having a charging cable (10) according to one of Claims 1 to 7.

## Revendications

1. Câble de recharge (10) pour une voiture électrique, ayant les particularités suivantes :
- le câble de recharge (10) comprend un corps isolant (11) muni de broches, un connecteur enfichable (12) muni de fiches de contact et d'ouvertures de contact (13) ainsi qu'une ligne de connexion (19), et
- le connecteur enfichable (12) relie le corps isolant (11) de manière amovible à la ligne de connexion (19) par les fiches de contact et des ouvertures de contact (13) de telle sorte que les broches sont reliées au connecteur enfichable (12) par les fiches de contact,
**caractérisé par** les particularités suivantes :
- la ligne de connexion (19) présente un dispositif d'alimentation et d'évacuation (17) pour un liquide de refroidissement,
- le connecteur enfichable (12) présente des raccords hydrauliques (18) du dispositif d'alimentation et d'évacuation (17) au corps isolant (11), et
- le corps isolant (11) est aménagé pour un refroidissement au moyen du liquide de refroidissement.

2. Câble de recharge (10) selon la revendication 1, ' **caractérisé par** l'une des particularités suivantes :
- les fiches de contact sont reliées en permanence au corps isolant (11), ou
- les fiches de contact sont reliées en permanence à la ligne de connexion (19).

3. Câble de recharge (10) selon la revendication 1 ou 2, **caractérisé par** les particularités suivantes :
- le connecteur enfichable (12) présente une collerette (14), et
- le connecteur enfichable (12) est formé de telle sorte que la collerette (14) pénètre dans le connecteur enfichable (12) lorsque le corps isolant (11) est relié à la ligne de connexion (19).

4. Câble de recharge (10) selon la revendication 3, **caractérisé par** la particularité suivante :
- la collerette (14) présente un verrouillage mécanique (15), en particulier une serrure.

5. Câble de recharge (10) selon l'une quelconque des revendications 1 à 4, **caractérisé par** la particularité suivante :
- le câble de recharge (10) présente une boucle de verrouillage, en particulier un shunt.

6. Câble de recharge (10) selon l'une quelconque des revendications 1 à 5, **caractérisé par** au moins l'une des particularités suivantes :
- le connecteur enfichable (12) présente des vis, en particulier des vis de sécurité,
- le connecteur enfichable (12) présente des ressorts de serrage, ou
- le connecteur enfichable (12) présente des rivets.

7. Câble de recharge (10) selon l'une quelconque des revendications 1 à 6, **caractérisé par** les particularités suivantes :
- ladite au moins une fiche de contact ou ladite au moins une ouverture de contact du corps isolant (11) dispose d'une surface en nickel-or.

8. Station de recharge munie d'un câble de recharge (10) selon l'une quelconque des revendications 1 à 7.
